# EUROPÄISCHE PATENTSCHRIFT

(11) **EP 1 801 008 B1**
(45) Veröffentlichungstag und Bekanntmachung des Hinweises auf die Patenterteilung: **20.11.2013**
(21) Anmeldenummer: 06019744.9
(22) Anmeldetag: 21.09.2006
(51) Int. Cl.: B64D 11/06, B60N 3/00

(54) **Tischsystem eines Sitzes**
Table system for a seat
Système de table

(30) Priorität: 22.12.2005 DE 102005061496
(43) Veröffentlichungstag der Anmeldung: 27.06.2007
(73) Patentinhaber: Recaro Aircraft Seating GmbH & Co. KG, 74523 Schwäbisch Hall (DE)
(72) Erfinder: Strasser, Ulrich, 86156 Augsburg (DE)
(74) Vertreter: Daub, Thomas

(56) Entgegenhaltungen:
- EP-A- 0 084 845
- US-A- 4 944 552
- US-A- 5 022 706
- US-A- 5 547 247
- US-A- 5 816 648
- US-A1- 2001 000 639
- US-A1- 2003 188 672

## Beschreibung

Die Erfindung bezieht sich auf eine Verriegelungseinrichtung für ein Tischsystem bei einem Sitz, insbesondere Fluggastsitz, mit einem ersten und einem zweiten Tischteil, die um voneinander verschiedene Schwenkachsen zwischen horizontalen Gebrauchsstellungen und Nichtgebrauchs- oder Verstaustellungen bewegbar sind.

Bekanntermaßen ist man bei Sitzen, die zur Personenbeförderung in Verkehrsmitteln vorgesehen sind, bestrebt, am Sitz Zusatzelemente vorzusehen, die dem Sitzbenutzer einen zusätzlichen Komfort bieten. Dies gilt insbesondere bei Sitzen, bei denen längere Reisedauern in Frage kommen, etwa bei Fährschiffen oder insbesondere Verkehrsflugzeugen. Im Hinblick hierauf ist es Stand der Technik, schwenkbare Tischteile vorzusehen, die, in ihre Gebrauchsstellung gebracht, beispielsweise als Esstisch dienen können oder mit kleinerer Tischfläche, als sogenannter Cocktailtisch, eine Ablage für Getränke bilden können.

Um bei derartigen Tischsystemen eine betriebssichere und störungsfreie Handhabung der Tischteile sicherzustellen sowie ein betreffendes Tischteil in einer bestimmten Position oder Gebrauchsstellung gegen Verschwenken zu sichern, muss die Möglichkeit einer Verriegelung der Tischteile gegeben sein.

Derartige Tischsysteme werden beispielsweise in der US2001/000639 A1, der EP0084845A oder der US5547247A beschrieben.

Im Hinblick hierauf stellt sich die Erfindung die Aufgabe, eine Verriegelungseinrichtung zur Verfügung zu stellen, die sich durch besonders einfache Bauweise auszeichnet.

Erfindungsgemäß ist diese Aufgabe durch ein Tischsystem gelöst, das die Merkmale des Patentanspruches 1 in seiner Gesamtheit aufweist. Weitere Ausführungsformen des erfindungsgemäßen Tischsystems werden in den abhängigen Ansprüchen beschrieben.

Dadurch, dass gemäß dem kennzeichnenden Teil des Anspruches 1 beiden Tischteilen Sperrteile zugeordnet sind, die relativ zueinander in eine Wirkposition einstellbar sind, bei der sie gegen das Anheben eines Tischteiles sperren, sind die Tischteile in ihrer Gebrauchsstellung besonders einfach und sicher festlegbar.

Bei dem erfindungsgemäßen Tischsystem ist ein in seiner Verstaustellung in einem Schacht
einer den Sitz seitlich begrenzenden Konsole versenktes erstes Tischteil zum Überführen in die Gebrauchsstellung aus der Konsole herausziehbar und um eine in Reise/Flug-Richtung verlaufende, an der Konsole gelegene Achse schwenkbar. Durch die Verriegelungseinrichtung ist bei solchen Tischsystemen sichergestellt, dass der aus der Konsole nach oben heraus gezogene und sodann nach unten in die horizontale Gebrauchsstellung geschwenkte Tischteil, der als Esstisch vorgesehen ist, nicht ungewollt oder versehentlich hoch geklappt wird.

Bei derartigen Sitzsystemen mit in der Sitzkonsole befindlichem Schacht kann als zweites Tischteil ein in der Gebrauchsstellung den Schacht der Konsole bedeckende und in der Nichtgebrauchsstellung den Schacht freigebende Tischklappe vorgesehen und um eine Achse schwenkbar sein, die zur Achse des ersten Tischteiles parallel und an der Konsole gegen das Zentrum der Konsole hin versetzt gelegen ist.

Weiterhin kann die Anordnung so getroffen sein, dass das erste Tischteil zwischen einer ersten Gebrauchsstellung, in der es, auf den Schacht der Konsole ausgerichtet, sich an den Seitenrand der in Gebrauchsstellung befindlichen Tischklappe anschließt und eine seitliche Verlängerung von deren Tischfläche bildend, entlang dieses Seitenrandes in Reise/Flug-Richtung nach vorn in zweite Gebrauchsstellungen verschiebbar ist. Eine solche Verlagerung dieses Tischteiles, des Esstisches, kann dem Zweck dienen, dieses Tischteil mit einem weiteren Zusatz-Tischteil zu kombinieren, welches beispielsweise von der Rückenlehnenrückseite eines nächst vorderen Sitzes in die Horizontallage abklappbar sein kann. Das Kombinieren des Esstisches mit diesem zusätzlichen, vom Vordersitz getragenen Tischteil ermöglicht es, dem Sitzbenutzer eine besonders große Tischfläche als Arbeitsfläche zur Verfügung zu stellen.

Bei derartigen Systemen ist es besonders wichtig, durch die betreffende Verriegelungseinrichtung sicherzustellen, dass das nach vorne verschiebbare Tischteil, der Esstisch, nur dann angehoben und hoch geschwenkt werden kann, wenn er sich in seiner nicht nach vorn verschobenen, hinteren Ausgangsposition, der ersten Gebrauchsstellung, befindet. Im Hinblick hierauf ist bei einem besonders vorteilhaften Ausführungsbeispiel der erfindungsgemäßen Verriegelungseinrichtung die Anordnung so getroffen, dass die den Tischteilen zugeordneten Sperrteile in Abhängigkeit vom Verschieben des ersten Tischteiles (des Esstisches) aus seiner ersten Gebrauchsstellung heraus relativ zueinander in ihre Wirkposition einstellbar sind. Dadurch ist sichergestellt, dass das erste Tischteil nur in der mit dem Schacht der Konsole fluchtenden Position hoch geschwenkt werden kann.

Das erste Tischteil kann für seine Verschiebebewegung zwischen erster Gebrauchsstellung und nach vorn verschobenen zweiten Gebrauchsstellungen an einem an der Konsole schwenkbaren Tragarm gelagert sein, wobei das dem ersten Tischteil zugeordnete Sperrteil unterhalb der Tischfläche des ersten Tischteiles am Tragarm gelagert und zwischen Wirkposition und unwirksamer Stellung bewegbar ist.

Dieses Sperrteil kann ein zwischen dem Tragarm und der Unterseite des ersten Tischteiles angeordneter, schwenkbar gelagerter Riegelkörper sein, der bei der der Wirkposition entsprechenden Schwenkstellung mit einem an der Tischklappe vorgesehenen, das zweite Sperrteil bildenden Sitz sperrend zusammenwirkt.

In besonders vorteilhafter Weise kann hierbei an der Unterseite des ersten Tischteiles ein in Richtung auf den Tragarm vorspringender Mitnehmerkörper vorgesehen sein, der bei Verschieben des ersten Tischteiles aus der ersten Gebrauchsstellung heraus den Riegelkörper in die Wirkposition und beim Zurückschieben in die erste Gebrauchsstellung den Riegelkörper in die unwirksame Stellung zurück bewegt. Dadurch erfolgt die Steuerung der Verriegelungseinrichtung quasi selbsttätig, indem das Verschieben des ersten Tischteiles nach vorn die Verriegelung aktiviert und beim Zurückschieben dieses Tischteiles in die Gebrauchsstellung die Verriegelungseinrichtung inaktiviert, d. h. den Sperrzustand beendet.

Nachstehend ist die Erfindung anhand von in der Zeichnung dargestellten Ausführungsbeispielen im Einzelnen erläutert. Es zeigen:
- Fig. 1 in perspektivischer Schrägansicht eine Teildarstellung einer Fluggastsitz-Mittelkonsole und eines Rückenlehnenteiles eines benachbarten Vordersitzes;
- Fig. 2 eine gegenüber Fig. 1 in größerem Maßstab gezeichnete, perspektivische Schrägansicht der Tischsysteme, die an einer zentralen Trägerplatte einer Mittelkonsole zwischen zwei nebeneinander liegenden Fluggastsitzen gelagert sind, wobei ohne Verkleidungen und weitere Strukturen der Konsole lediglich die wesentlichen Komponenten der Tischsysteme zu sehen sind;
- Fig. 3 eine der Fig. 2 ähnliche Darstellung, wobei jedoch ein erstes Tischteil aus der Konsole nach oben herausgezogen dargestellt ist;
- Fig. 4 eine abgebrochen und schematisch vereinfacht gezeichnete perspektivische Schrägansicht lediglich eines Teiles der Mittelkonsole mit daran in Gebrauchsstellung befindlichen Tischteilen;
- Fig. 5 eine der Fig. 4 ähnliche Darstellung, wobei jedoch ein Tischteil aus der in Fig. 4 gezeigten ersten Gebrauchsstellung heraus in Flugrichtung in eine zweite Gebrauchsstellung verschoben ist, und
- Fig. 6 eine schematisch vereinfachte perspektivische Schrägansicht, in der Sperrteile der Verriegelungseinrichtung zwischen Tischteilen gemäß einem weiteren Ausführungsbeispiel der Erfindung verdeutlicht sind.

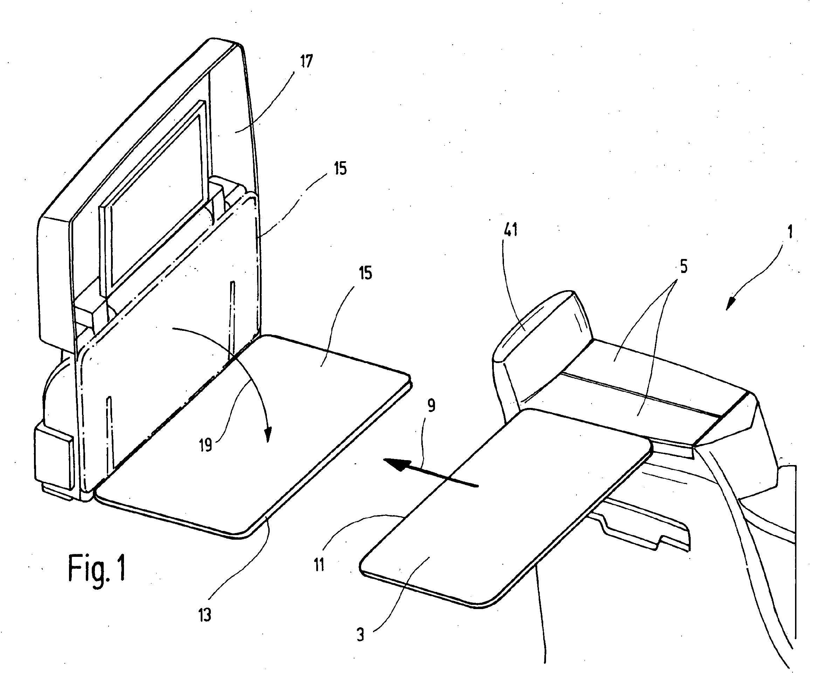

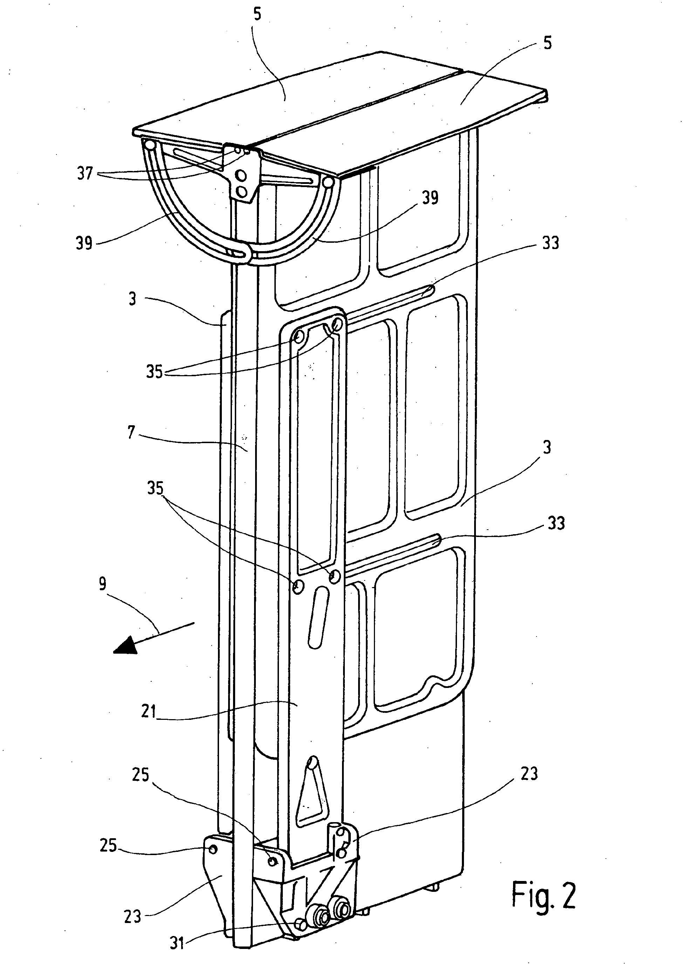

Fig. 1 zeigt den oberen Abschnitt einer Mittelkonsole 1 zwischen zwei nebeneinander liegenden Fluggastsitzen, die in der Zeichnung nicht dargestellt sind. Jeder Seite der Mittelkonsole 1, d. h. jedem der beiden nebeneinander liegenden Sitzen; ist ein Tischsystem zugeordnet, von dem in Fig. 1 ein erstes Tischteil in Form eines Esstisches 3 sowie ein zweites Tischteil in Form einer ein so genanntes Cocktailtischchen bildenden Tischklappe 5 gezeigt sind. Von dem dem daneben liegenden Sitz zugehörigen Tischsystem ist in Fig. 1 lediglich die Tischklappe 5 zu sehen. Das den Esstisch 3 bildende Tischteil befindet sich in Fig. 1 in seiner ersten, horizontalen Gebrauchsstellung, in der der Esstisch 3 relativ zur Mittelkonsole 1 in einer Position ist, die auf einen in der Mittelkonsole 1 befindlichen vertikalen Schacht ausgerichtet ist, in dem der Esstisch 3 versenkt und daher verstaut werden kann. Für den jeweiligen Esstisch 3 an jeder Seite der Mittelkonsole 1 ist jeweils ein Schacht vorgesehen, wobei die beiden Schächte durch eine in der Mittelkonsole 1 zentral gelegene Trägerplatte 7, siehe Fig. 2, voneinander getrennt sind. Die letzt genannte Fig. 2 zeigt die Esstische 3 beider nebeneinander liegender Sitze in ihrer Nichtgebrauchsstellung, d. h. in der Verstaustellung im jeweiligen Schacht.

Wie später näher erläutert, ist der Esstisch 3 aus der in Fig. 1 gezeigten ersten Gebrauchsstellung in der mit Pfeil 9 angegebenen Flugrichtung nach vorn verschiebbar, so dass er in einer weiteren Gebrauchsstellung mit seinem vorderen Rand 11 an einen Rand 13 eines Zusatztisches 15 angrenzt. Dieser kann von einer an der Rückenlehnenrückseite eines benachbarten Vordersitzes gelegenen Verstaustellung in die in Fig. 1 ausgezogen gezeichnete Horizontallage geschwenkt werden, wie mit Bogenpfeil 19 angedeutet. Nach Verschieben des Esstisches 3 nach vorn können die Ränder 11 und 13 miteinander verbunden werden, beispielsweise durch eine Schnappverbindung oder mittels Nut und Feder oder dergleichen, so dass Esstisch 3 und Zusatztisch 15 dem Fluggast eine große Arbeitsfläche zur Verfügung stellen.

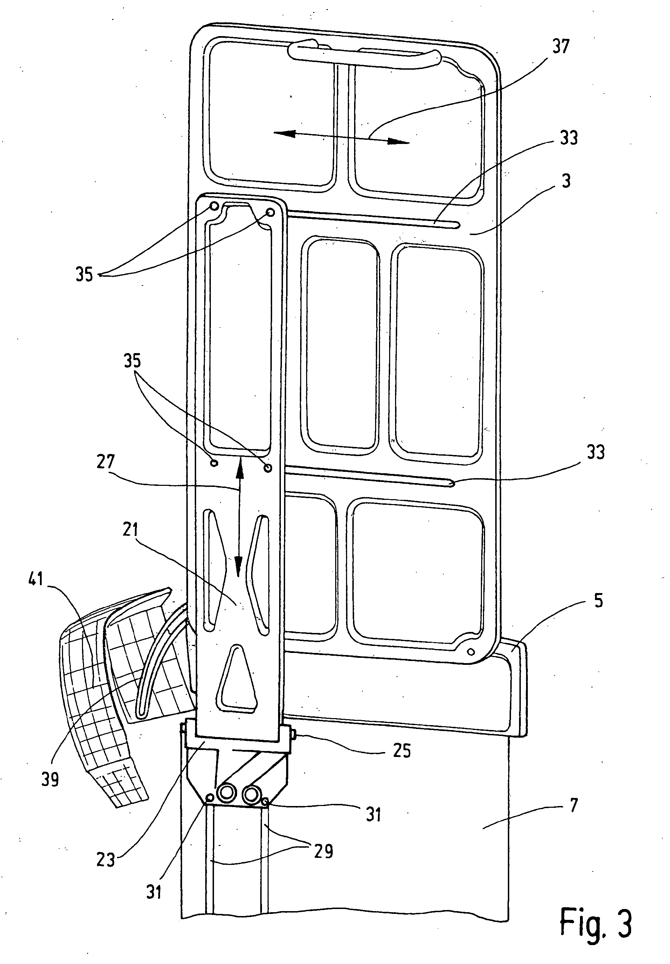

Die Fig. 2 und 3 zeigen die vertikale, innere Trägerplatte 7, die in der Mittelkonsole 1 die beiden nebeneinander liegenden Schächte für die Aufnahme der Esstische 3 voneinander trennt. Der jeweilige Esstisch ist an einem Tragarm 21 gelagert, der seinerseits an einem Gelenkträger 23 um eine Schwenkachse 25 schwenkbar ist. Die Schwenkachse 25 verläuft horizontal und in Sitzlängsrichtung, d. h. in Flugrichtung.

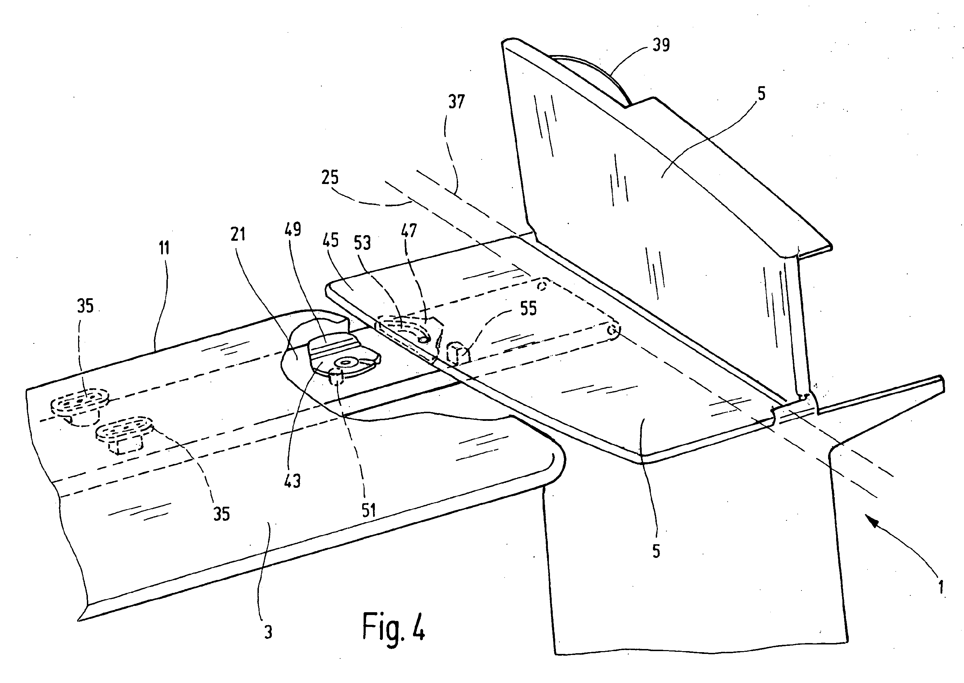

Der Gelenkträger 23 ist, um das Herausziehen des Esstisches 3 aus dem Schacht der Mittelkonsole zu ermöglichen, entsprechend dem Doppelpfeil 27 (Fig. 3) bewegbar. Zu diesem Zweck ist der Gelenkträger 23 an der festen Trägerplatte 7 entlang vertikaler Schwalbenschwanzführungen 29 vertikal verschiebbar, in die Führungskörper 31 eingreifen. Der Esstisch 3 seinerseits weist ebenfalls Schwalbenschwanzführungen 33 auf, in die Führungskörper 35 eingreifen, die vom Tragarm 21 vorstehen (siehe Fig. 4) und die Verschiebebewegung des Esstisches in Richtung des Doppelpfeiles 37 ermöglichen.

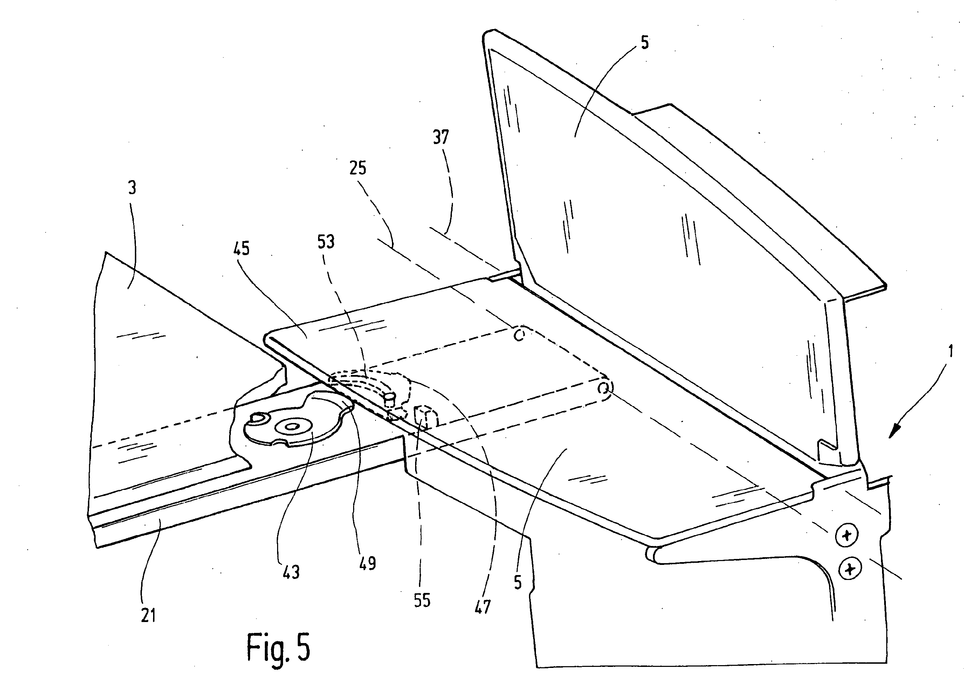

Fig. 2 zeigt den Zustand des in den Schacht voll eingefahrenen Esstisches 3, wobei die Tischklappen 5, die am oberen Ende der Trägerplatte 7 um Schwenkachsen 37 klappbar sind, in ihrer horizontalen Gebrauchsstellung gezeigt sind, in der sie die obere Bedeckung des jeweiligen Schachtes bilden. Wenn der Esstisch 3, wie in Fig. 3 dargestellt, zusammen mit dem Tragarm 21 aus dem Schacht der Konsole hochgezogen ist, befindet sich der die Schwenkachse 25 des Esstisches 3 definierende Gelenkkörper 23 am oberen Ende der Trägerplatte 7, wobei sich für die Schwenkachse 25 die in Fig. 4 und 5 angedeutete Position ergibt. Aus Fig. 4 und 5 ist auch entnehmbar, dass sich die Schwenkachse 37 der Tischklappe 5 in einem Abstand von der Schwenkachse 25 des Tragarmes 21 und des Esstisches 3 befindet, dass nämlich die Schwenkachse 37 der Tischklappe 5 gegen das Zentrum der Konsole hin versetzt ist.

Wie erwähnt, ist der Esstisch 3 mit Hilfe der Führungen 33 und Führungskörper 35 relativ zum Tragarm 21 in Richtung des Doppelpfeiles 27 (Fig. 3) verschiebbar. Diese Verschiebebewegung soll jedoch nur dann möglich sein, wenn der Esstisch 3 aus der in Fig. 3 gezeigten Position in seine horizontale Gebrauchsstellung (um die Schwenkachse 25) herab geschwenkt ist, so dass er die in Fig. 4 gezeigte erste Gebrauchsstellung einnimmt. Um eine Verschiebebewegung des nicht in seiner horizontalen Gebrauchsstellung befindlichen Esstisches 3 zu verhindern, befindet sich an den Tischklappen 5 jeweils ein einen Viertelkreisbogen bildender Sicherheitsbügel 39. Dieser erstreckt sich, wie am deutlichsten aus Fig. 3 zu ersehen ist, in die Verschiebebahn des hochgestellten Esstisches 3, der erst dann aus dem Sperrbereich des Bügels 39 gelangt, wenn der Esstisch 3 in die horizontale Gebrauchsstellung herab geschwenkt ist. Somit wird verhindert, dass der Esstisch 3 nach vorn (Pfeil 9) verschoben werden kann, solange er sich in einer angehobenen Zwischenstellung befindet, bei der eine Kollision mit dem vorderen Konsolenkopf 41 möglich wäre, an dem sich gegebenenfalls empfindliche Sitz-Bedienelemente befinden. Erst wenn die horizontale Gebrauchsstellung erreicht ist und dadurch die Tischklappe 5 schließen kann, siehe Fig. 1 und 4, befindet sich der Sicherheitsbügel 39 unterhalb des vorderen Randes 11 des Esstisches 3, so dass dessen Verschiebebewegung aus der ersten, hinteren Gebrauchsstellung erfolgen kann.

Diese erste Gebrauchsstellung des Esstisches 3 ist in Fig. 4 gezeigt. In dieser Stellung ist keine gegenseitige Verriegelung der beiden Tischteile, also von Esstisch 3 und Tischklappe 5, vorgesehen, d. h. der Esstisch 3, der in dieser Stellung mit dem Schacht in der Konsole 1 fluchtet, kann mit seinem Tragarm 21 um die Schwenkachse 25 angehoben werden, wobei die Tischklappe 5, die ihrerseits um die Schwenkachse 37 schwenkt, mit angehoben wird.

Da der Esstisch 3 in der horizontalen Lage außerhalb des Bereiches des Sicherheitsbügel 39 ist, kann der Esstisch nach vorn verschoben werden, beispielsweise zur Annäherung an den Zusatztisch 15. Fig. 5 zeigt, dass der Esstisch 3 aus der ersten Gebrauchsstellung nach vorn verschoben ist, wobei die zwischen Esstisch 3 und Tischklappe 5 vorgesehene Verriegelungseinrichtung aktiviert ist. Wie Fig. 4 und 5 zeigen, weist die Verriegelungseinrichtung ein dem Esstisch 3 zugeordnetes erstes Sperrteil in Form eines Riegelkörpers 43, der am Tragarm 21 drehbar gelagert ist, sowie einen an der Unterseite der Deckelplatte 45 der Tischklappe 5 befindlichen Sitz 47 für einen sperrenden Eingriff mit dem Sperrkörper 49 des Riegelkörpers 43 auf. Dieser ist zwischen Unterseite des Esstisches 3 und zugewandter Seite des Tragarmes 21 drehbar gelagert. Wie lediglich in Fig. 4 mit gestrichelter Linie angedeutet, befindet sich an der Unterseite des Esstisches 3 ein gegen den Tragarm 21 vorstehender Mitnehmerstift 51. Wenn der Esstisch 3 aus der in Fig. 4 gezeigten Stellung relativ zum Tragarm 21 nach vorn verschoben wird, befindet sich der Riegelkörper 43 in der Bewegungsbahn des Mitnehmerstiftes 51, so dass der Riegelkörper 43, sobald der Esstisch 3 die in Fig. 4 gezeigte erste Gebrauchsstellung oder Ausgangsstellung verläßt, verdreht und in die Fig. 5 gezeigte Wirkposition gebracht wird, in der der Sperrkörper 49 an den als zweites Sperrteil dienenden Sitz 47 an der Tischklappe 5 angenähert ist. Wird nun versucht, was durch die Verriegelungseinrichtung verhindert werden soll, den nach vorn verschobenen Esstisch 3 mit dem Tragarm 21 anzuheben, wobei die Tischklappe 5 mit angehoben wird, dann gelangt, da die Schwenkbewegungen um zueinander versetzte Schwenkachsen 25 bzw. 37 erfolgen der Sperrkörper 49 des Riegelkörpers 43 in Sperreingriff mit dem Sitz 47 an der Tischklappe, weil aufgrund der unterschiedlichen Lagen der Schwenkachsen 25 und 37 eine Bewegungskomponente zur Annäherung des Sperrkörpers 49 an den Sitz 47 erfolgt. Letzterer weist eine unterhalb der Deckelplatte 45 sitzende, schalenartig geformte Sperrfläche 53 für den Sperrkörper 49 auf.

Zwischen der Unterseite der Deckelplatte 45 und dem Tragarm 21 befindet sich ein vom Tragarm 21 vorstehender Distanzkörper 55. Dieser hilft sowohl mit, beim Höchschwenken des Tragarmes 21 die Tischklappe 5 mitzunehmen als er auch ein Distanzstück bildet, das, indem es einen vorbestimmten Abstand zwischen Unterseite der Tischklappe 5 und anliegender Fläche des Tragarmes 21 definiert, sicherstellt, dass in der Gebrauchsstellung die Oberflächen von Esstisch 3 und von Tischklappe 5 ohne einen zwischen ihnen befindlichen Höhenabstand zueinander niveaugleich sind.

Wird der Esstisch 3 aus der in Fig. 5 gezeigten Stellung entgegen der Flugrichtung wieder in die Ausgangsstellung oder die erste Gebrauchsstellung zurückgeschoben, läuft der Mitnehmerstift 51 am Ende der Verschiebebewegung wieder am Riegelkörper 43 an und verdreht diesen in die in Fig. 4 gezeigte Drehstellung, so dass die Verriegelungseinrichtung wieder deaktiviert ist. Somit kann nur in dieser Stellung, wo der Esstisch 3 wiederum fluchtend auf den Schacht in der Konsole 1 ausgerichtet ist, das Anheben und das sich anschließende Verstauen des Esstisches 3 in der Konsole erfolgen.

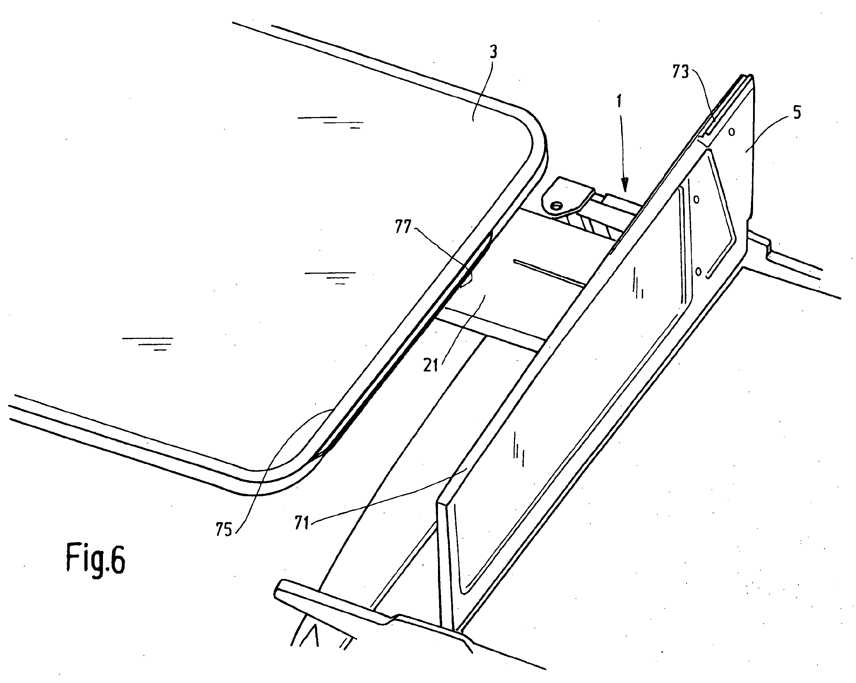

Fig. 6 zeigt eine abgewandelte Ausführungsform der Verriegelungseinrichtung. In dieser Figur ist nur die an der Mittelkonsole 1 linksseitig gelegene Tischklappe 5 in hochgestelltem Zustand dargestellt, und der Esstisch 3 befindet sich in seiner ersten Gebrauchsstellung. An demjenigen Seitenrand, welcher bei in die Gebrauchsstellung abgeklappter Tischklappe 5 an den Esstisch angrenzt, also am Seitenrand 71, befindet sich zur Bildung einer Nut-Feder-Verbindung eine mit 73 bezeichnete Nut. Diese befindet sich an dem in Flugrichtung vorne gelegenen Endbereich des Randes 71 und erstreckt sich lediglich über einen geringen Teil des Randes 71. Der Esstisch 3 weist an dem der Tischklappe 5 zugekehrten Seitenrand 75 eine rippenartig vorstehende Feder 77 auf, die vom in Flugrichtung vorn gelegenen Ende des Randes 75 in einem Abstand beginnt, der der Länge der Nut 73 angepasst ist und wobei sich die Feder 77 bis in die Nähe des hinteren Endbereiches des Randes 75 erstreckt.

Bei dieser Anordnung befindet sich die Feder 77 bei nach unten geklappter Tischklappe 5 nur dann außer Eingriff mit der Nut 73, wenn sich der Esstisch 3 in der ersten Gebrauchsstellung befindet. Wird der Esstisch aus der ersten Gebrauchsstellung nach vorn verschoben, läuft die Feder 77 in die Nut 73 ein. Wird nun versucht, den Esstisch 3 anzuheben, dann bilden die Nut 73 und die in sie eingreifende Feder 77 Sperrteile zur Verriegelung der Tischelemente gegen Anheben. Mit anderen Worten gesagt, ist der Esstisch 3 nur in der zurückgeschobenen ersten Gebrauchsstellung anhebbar.

## Patentansprüche

1. Tischsystem für einen Sitz, mit einer Verriegelungseinrichtung und mit einer Konsole (1) und mit einem Esstisch (3), der in seiner Verstaustellung in einem Schacht der Konsole (1), die dazu vorgesehen ist, seitlich neben einem Sitz angeordnet zu sein, versenkt und zum Überführen in die Gebrauchsstellung aus der Konsole (1) herausziehbar ist, und mit einer Tischklappe (5), die in der Gebrauchsstellung den Schacht der Konsole (1) bedeckt und in der Nichtgebrauchsstellung den Schacht freigibt, wobei der Esstisch (3) und die Tischklappe (5) um voneinander verschiedene Schwenkachsen (25 bzw. 37) zwischen horizontalen Gebrauchsstellungen und Nichtgebrauchs- oder Verstaustellungen bewegbar sind, und mit Esstisch (3) und Tischklappe (5) zugeordneten Sperrteilen (43, 47; 73, 77), die in Abhängigkeit vom Verschieben des Esstischs (3) aus seiner ersten Gebrauchsstellung relativ zueinander in eine Wirkposition einstellbar sind, bei der sie gegen das Anheben des in Gebrauchsstellung befindlichen Esstischs (3) gegeneinander sperren, wobei der Esstisch (3) zwischen einer ersten Gebrauchsstellung, in der er, auf den Schacht der Konsole (1) ausgerichtet, sich an einen Seitenrand der in Gebrauchsstellung befindlichen Tischklappe (5) anschließt und eine seitliche Verlängerung einer Tischklappenoberfläche bildet, entlang dieses Seitenrandes in zweite Gebrauchsstellungen verschiebbar ist.

2. Tischsystem nach Anspruch 1, **dadurch gekennzeichnet, dass** der Esstisch (3) um eine entlang des Seitenrands der in Gebrauchsstellung befindlichen Tischklappe (5) verlaufende, an der Konsole (1) gelegene Achse (25) schwenkbar ist.

3. Tischsystem nach Anspruch 2, **dadurch gekennzeichnet, dass** die Tischklappe (5) um eine Achse (37) schwenkbar ist, die zur Achse (25) des Esstischs (3) parallel und an der Konsole (1) gegen das Zentrum der Konsole (1) hin versetzt gelegen ist.

4. Tischsystem nach Anspruch 3, **dadurch gekennzeichnet, dass** der Esstisch (3) für seine Verschiebebewegung zwischen erster Gebrauchsstellung und zweiten Gebrauchsstellungen an einem an der Konsole (1) schwenkbaren Tragarm (21) gelagert ist.

5. Tischsystem nach Anspruch 4, **dadurch gekennzeichnet, dass** das dem Esstisch (3) zugeordnete Sperrteil (43) unterhalb der Tischfläche des Esstischs (3) am Tragarm (21) gelagert und zwischen Wirkposition und unwirksamer Stellung bewegbar ist.

6. Tischsystem nach Anspruch 5, **dadurch gekennzeichnet, dass** als Sperrteil am Tragarm (21) ein zwischen diesem und der Unterseite des Esstischs (3) angeordneter, schwenkbar gelagerter Riegelkörper (43) vorgesehen ist, der bei der der Wirkposition entsprechenden Schwenkstellung mit einem am angrenzenden Seitenrand der Tischklappe (5) vorgesehenen, ein zweites Sperrteil bildenden Sitz (47) sperrend zusammenwirkt.

7. Tischsystem nach Anspruch 6, **dadurch gekennzeichnet, dass** an der Unterseite des Esstischs (3) ein in Richtung auf den Tragarm (21) vorspringender Mitnehmerkörper (51) vorgesehen ist, der bei Verschieben des Esstischs (3) aus der ersten Gebrauchsstellung heraus den Riegelkörper (43) in die Wirkposition und beim Zurückschieben in die erste Gebrauchsstellung den Riegelkörper (43) in die unwirksame Stellung zurück bewegt.

8. Tischsystem nach Anspruch 6 oder 7, **dadurch gekennzeichnet, dass** die Sperrteile (43, 47) bei der Wirkposition des Riegelkörpers (43) gegen ein Anheben sowohl des Esstischs (3) als auch der Tischklappe (5) aus der jeweiligen Gebrauchsstellung sperrend wirken.

9. Tischsystem nach Anspruch 3 oder 4, **dadurch gekennzeichnet, dass** die Sperrteile zwischen Esstisch (3) einerseits und Tischklappe (5) andererseits eine Nut-Feder-Führung (73, 77) aufweisen, entlang deren sich der Esstisch (3) bei seiner Verschiebebewegung aus der ersten Gebrauchsstellung heraus bewegt.

10. Tischsystem nach Anspruch 9, **dadurch gekennzeichnet, dass** die Nut-Feder-Führung eine vom Rand (75) des Esstischs (3) vorspringende, sich in Verschieberichtung erstreckende Feder (77) und eine am zugeordneten Rand der Tischklappe (5) befindliche Nut (73) aufweist, die in Verschieberichtung des Esstischs (3) zueinander so versetzt sind, dass bei dessen erster Gebrauchsstellung noch kein gegenseitiger Eingriff von Feder (77) und Nut (73) gegeben ist, diese jedoch bei der Verschiebebewegung ineinander einfahren.

11. Tischsystem nach einem der Ansprüche 4 bis 10, **dadurch gekennzeichnet, dass** der Esstisch (3) in einer vorgeschobenen zweiten Gebrauchsstellung zum Bilden einer vergrößerten Tischfläche mit einem Zusatztisch (15) kombinierbar ist, der seinerseits in eine sich von der Rückseite (17) der Rückenlehne eines benachbarten Vordersitzes weg erstreckende Gebrauchsstellung bringbar ist.

## Claims

1. Table system for a seat, having a locking device and having a panel (1) and a dining table (3) which, in its stowage position, is sunk in a duct of the panel (1), and can be pulled out of the panel (1) in order to be transferred into the use position, said panel (1) being provided to be arranged laterally beside a seat, and having a table flap (5) which, in the use position, covers the duct of the panel (1) and, in the not-in-use position, releases the duct , wherein the dining table (3) and the table flap (5) can be moved, around respectively different pivot axes (25 respectively 37), between horizontal use positions and not-in-use or stowage positions, and having blocking parts (43, 47; 73, 77) which are assigned to the dining table (3) and table flap (5) and, in dependence on the dining table (3) being displaced from its primary use position, can be adjusted relative to one another into an operative position in which they execute a blocking action counter to one another so that the dining table (3), in the use position, cannot be raised, wherein the dining table (3) is displaceable from a primary use position in which it is oriented towards the duct of the panel (1), and abuts a lateral edge of the table flap (5) which is in the use position and forms a lateral extension of a table flap surface into secondary use positions along said lateral edge.

2. Table system according to Claim 1, **characterized in that** the dining table (3) can be pivoted around an axis (25) running along the lateral edge of the table flap (5) that is in the use position, the axis (25) being situated at the panel (1).

3. Table system according to Claim 2, **characterized in that** the table flap (5) can be pivoted around an axis (37) which is parallel to the axis (25) of the dining table (3) and is situated at the panel (1) offset with respect to the centre of the panel (1).

4. Table system according to Claim 3, **characterized in that**, for its displacement between a primary use position and secondary use positions, the dining table (3) is mounted on a carrying arm (21) which can be pivoted at the panel (1).

5. Table system according to Claim 4, **characterized in that** the blocking part (43) assigned to the dining table (3) is mounted on the carrying arm (21), beneath the table surface of the dining table (3), and can be moved between an operative position and a non-operative position.

6. Table system according to Claim 5, **characterized in that** a pivotably mounted locking body (43) which is arranged between the carrying arm (21) and the underside of the dining table (3) is provided as a blocking part on the carrying arm (21),which locking body (43), in the pivoting position corresponding to the operative position, interacts in a blocking fashion with a seat (47), which is provided at the adjacent lateral edge of the table flap (5) and forms a second blocking part.

7. Table system according to Claim 6, **characterized in that** a driver body (51) is provided at the underside of the dining table (3) , which driver body (51) projects in the direction of the carrying arm (21) and, when the dining table (3) is displaced from the primary use position, moves the locking body (43) into the operative position and, when the dining table (3) is pushed back into the primary use position, moves the locking body (43) back into the inoperative position.

8. Table system according to Claim 6 or 7, **characterized in that** the blocking parts (43, 47), in the operative position of the locking body (43), act in blocking fashion against a raising action both of the dining table (3) and of the table flap (5) out of the respective use position.

9. Table system according to Claim 3 or 4, **characterized in that** the blocking parts have a tongue-and-groove guide (73, 77) between the dining table (3), on the one hand, and the table flap (5), on the other hand, and the dining table (3) moves along said guide in a displacement motion out of the primary use position.

10. Table system according to Claim 9, **characterized in that** the groove/tongue guide has a tongue (77), which projects from the periphery (75) of the dining table (3) and extends in the displacement direction, and a groove (73), which is located on the associated periphery of the table flap (5), the tongue and groove being offset in relation to one another in the displacement direction of the dining table (3) such that, in the primary use position of the latter, there is still no mutual engagement of the tongue (77) and groove (73), but the latter move one into the other in the displacement motion of the dining table.

11. Table system according to one of Claims 4 to 10, **characterized in that**, in an advanced, secondary use position, the dining table (3), in order to form an enlarged table top, can be combined with an additional table (15) which, for its part, can be moved into a use position in which it extends away from the rear side (17) of the backrest of an adjacent seat in front.

## Revendications

1. Système de table pour un siège, comprenant un dispositif de verrouillage et une console (1) ainsi qu'une table à manger (3), qui, dans sa position de rangement, est renfoncée dans un conduit de la console (1) qui est prévue pour être disposée latéralement à côté d'un siège, et qui peut être ressortie hors de la console (1) en vue de son transfert dans la position d'utilisation, et comprenant un volet de table (5) qui, dans la position d'utilisation, recouvre le conduit de la console (1) et, dans la position de non-utilisation, libère le conduit, la table à manger (3) et le volet de table (5) pouvant être déplacés autour d'axes de pivotement différents l'un de l'autre (25, respectivement 37) entre des positions d'utilisation horizontales et des positions de non-utilisation ou de rangement, et comprenant des pièces de verrouillage (43, 47; 73, 77) associées à la table à manger (3) et au volet de table (5), lesquelles, en fonction du déplacement de la table à manger (3) hors de sa première position d'utilisation, peuvent être ajustées les unes par rapport aux autres dans une position fonctionnelle dans laquelle elles se bloquent les unes contre les autres pour empêcher le soulèvement de la table à manger (3) se trouvant dans la position d'utilisation, la table à manger (3) pouvant être déplacée d'une première position d'utilisation, dans laquelle elle se raccorde, de manière orientée vers le conduit de la console (1), à un bord latéral du volet de table (5) se trouvant dans la position d'utilisation, et forme un prolongement latéral d'une surface de volet de table, le long de ce bord latéral dans des deuxièmes positions d'utilisation.

2. Système de table selon la revendication 1, **caractérisé en ce que** la table à manger (3) peut être pivotée autour d'un axe (25) situé sur la console (1) et s'étendant le long du bord latéral du volet de table (5) se trouvant dans la position d'utilisation.

3. Système de table selon la revendication 2, **caractérisé en ce que** le volet de table (5) peut être pivoté autour d'un axe (37) qui est disposé parallèlement à l'axe (25) de la table à manger (3) et qui est décalé à la console (1) vers le centre de la console (1).

4. Système de table selon la revendication 3, **caractérisé en ce que** la table à manger (3) est supportée pour son mouvement de déplacement entre une première position d'utilisation et des deuxièmes positions d'utilisation sur un bras de support (21) pouvant être pivoté sur la console (1).

5. Système de table selon la revendication 4, **caractérisé en ce que** la pièce de verrouillage (43) associée à la table à manger (3) est supportée au-dessous de la surface de la table à manger (3) sur le bras de support (21) et peut être déplacée entre une position fonctionnelle et une position non fonctionnelle.

6. Système de table selon la revendication 5, **caractérisé en ce que** l'on prévoit comme pièce de verrouillage sur le bras de support (21) un corps de verrouillage (43) monté à pivotement et disposé entre le bras de support et le côté inférieur de la table à manger (3), lequel corps de verrouillage coopère par blocage avec un siège (47) formant une deuxième pièce de verrouillage et prévu sur le bord latéral adjacent du volet de table (5), dans la position de pivotement correspondant à la position fonctionnelle.

7. Système de table selon la revendication 6, **caractérisé en ce qu'**un corps d'entraînement (51) saillant dans la direction du bras de support (21) est prévu sur le côté inférieur de la table à manger (3), lequel corps d'entraînement, lors du déplacement de la table à manger (3) depuis la première position d'utilisation, déplace le corps de verrouillage (43) dans la position fonctionnelle, et lors du retour dans la première position d'utilisation, ramène le corps de verrouillage (43) dans la position non fonctionnelle.

8. Système de table selon la revendication 6 ou 7, **caractérisé en ce que** les pièces de verrouillage (43, 47), lorsque le corps de verrouillage (43) est dans la position fonctionnelle, agissent par blocage pour empêcher un soulèvement de la table à manger (3) ainsi que du volet de table (5) hors de la position d'utilisation respective.

9. Système de table selon la revendication 3 ou 4, **caractérisé en ce que** les pièces de verrouillage entre la table à manger (3) d'une part et le volet de table (5) d'autre part présentent un guidage à rainure et languette (73, 77), le long duquel la table à manger (3) se déplace lors de son mouvement de déplacement hors de la première position d'utilisation.

10. Système de table selon la revendication 9, **caractérisé en ce que** le guidage à rainure et languette présente une languette (77) saillant depuis le bord (75) de la table à manger (3), s'étendant dans la direction de déplacement, et une rainure (73) se trouvant sur le bord associé du volet de table (5), lesquelles sont décalées l'une par rapport à l'autre dans la direction de déplacement de la table à manger (3) de telle sorte que dans sa première position d'utilisation, il n'existe encore aucun engagement mutuel entre la languette (77) et la rainure (73), mais que celles-ci s'engagent toutefois l'une dans l'autre lors du mouvement de déplacement.

11. Système de table selon l'une quelconque des revendications 4 à 10, **caractérisé en ce que** la table à manger (3), dans une deuxième position d'utilisation avancée, peut être combinée à une table supplémentaire (15) pour former une surface de table agrandie, la table supplémentaire pouvant être pour sa part amenée dans une position d'utilisation s'étendant à l'écart du côté arrière (17) du dossier d'un siège avant adjacent.
